(19) Europäisches Patentamt
European Patent Office
Office européen des brevets

(11) **EP 3 165 749 A1**

(12) **EUROPÄISCHE PATENTANMELDUNG**

(43) Veröffentlichungstag:
**10.05.2017 Patentblatt 2017/19**

(21) Anmeldenummer: **15192920.5**

(22) Anmeldetag: **04.11.2015**

(51) Int Cl.:
*F02D 41/14* [(2006.01)]    *F02D 41/24* [(2006.01)]
*F02D 19/06* [(2006.01)]    *F02D 19/10* [(2006.01)]
*F02D 41/20* [(2006.01)]    *F02D 41/30* [(2006.01)]

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **GE Jenbacher GmbH & Co. OG 6200 Jenbach (AT)**

(72) Erfinder:
• **Satria, Medy**
  **80805 München (DE)**
• **Imhof, Dino**
  **5400 Baden (CH)**
• **Burgmair, Raphael**
  **83620 Feldkirchen-Westerham (DE)**

(74) Vertreter: **Torggler & Hofinger Patentanwälte Postfach 85 6010 Innsbruck (AT)**

(54) **BRENNKRAFTMASCHINE MIT EINSPRITZMENGENSTEUERUNG**

(57) Dual-Fuel-Brennkraftmaschine, mit:
- einer Regeleinrichtung,
- wenigstens einem Brennraum,
- wenigstens einer Gaszuführvorrichtung zur Zufuhr eines gasförmigen Kraftstoffes zu dem wenigstens einen Brennraum, und
- wenigstens einem durch die Regeleinrichtung über ein Aktuatoransteuersignal regelbaren Injektor zur Einspritzung von flüssigem Kraftstoff in den wenigstens einen Brennraum, wobei wobei die Regeleinrichtung in einem Pilotbetriebsmodus der Brennkraftmaschine über das Aktuatoransteuersignal ein Öffnen der Nadel des Injektors im ballistischen Bereich der Nadel regelt, und wobei in der Regeleinrichtung ein Algorithmus abgelegt ist, welcher als Eingangsgrößen zumindest das Aktuatoransteuersignal ($\Delta t$) erhält und über ein Injektormodell eine Position der Nadel (6) berechnet und diese mit einem Nadelpositionssollwert ($z^{ref}$) vergleicht, und in Abhängigkeit des Ergebnisses des Vergleiches das Aktuatoransteuersignal ($\Delta t$) korrigiert, sowie ein Verfahren zum Betreiben einer solchen Brennkraftmaschine und eines Injektors einer solchen Brennkraftmschine.

Fig. 1

EP 3 165 749 A1

**Beschreibung**

Die vorliegende Erfindung betrifft eine Dual-Fuel-Brennkraftmaschine mit den Merkmalen des Oberbegriffs des Anspruchs 1 und ein Verfahren mit den Merkmalen des Oberbegriffs des Anspruchs 10 bzw. 11.

Dual-Fuel-Brennkraftmaschinen werden typischerweise in zwei Betriebsmodi betrieben. Dabei unterscheidet man einen Betriebsmodus mit primär flüssiger Kraftstoffzufuhr (kurz "Flüssigbetrieb"; im Falle der Verwendung von Diesel als flüssigem Kraftstoff "Dieselbetrieb" genannt) und einen Betriebsmodus mit primär gasförmiger Kraftstoffzufuhr, bei welchem der flüssige Kraftstoff als Pilotkraftstoff zum Initiieren der Verbrennung dient ("Gasbetrieb", oder auch als "Pilotbetrieb" oder "Zündstrahlbetrieb" bezeichnet). Als Beispiel für den flüssigen Kraftstoff sei Diesel genannt. Es könnte auch Schweröl oder ein anderer selbstzündfähiger Kraftstoff sein. Als Beispiel für den gasförmigen Kraftstoff sei Erdgas genannt. In Frage kommen noch andere gasförmige Kraftstoffe wie Biogas etc.

Im Pilotbetrieb wird eine geringe Menge an flüssigem Kraftstoff als sogenannte Piloteinspritzung in einen Brennraum einer Kolben-Zylindereinheit eingebracht. Durch die zum Einspritzzeitpunkt herrschenden Bedingungen entzündet sich der eingebrachte flüssige Kraftstoff und zündet ein im Brennraum der Kolben-Zylindereinheit vorliegendes Gemisch aus gasförmigem Kraftstoff und Luft. Die Menge an flüssigem Kraftstoff einer Piloteinspritzung beträgt typischerweise 0,5 - 5 % der gesamten, dem Brennraum der Kolben-Zylindereinheit in einem Arbeitszyklus der Brennkraftmaschine zugeführten Energiemenge.

Zur Begriffsklärung wird definiert, dass die Brennkraftmaschine entweder im Pilotbetrieb oder im Flüssigbetrieb betrieben wird. Bezüglich der Regeleinrichtung der Pilotbetrieb der Brennkraftmaschine als Pilotmodus bezeichnet, ein Flüssigbetrieb der Brennkraftmaschine wird bezüglich der Regeleinrichtung als Flüssigmodus bezeichnet.

Unter einem ballistischen Bereich versteht man einen Betrieb des Injektors für flüssigen Kraftstoff, bei welchem sich die Nadel ausgehend von einer "Vollgeschlossen"-Position in Richtung einer "Voll-offen"-Position bewegt, ohne diese jedoch zu erreichen. In Folge bewegt sich die Nadel wieder in Richtung der "Voll-geschlossen"-Position, ohne die "Voll-offen"-Position erreicht zu haben.

Die Substitutionsrate gibt an, welcher Anteil der der Brennkraftmaschine zugeführten Energie in Form des gasförmigen Kraftstoffes zugeführt wird. Angestrebt werden Substitutionsraten zwischen 98 und 99,5 %. Derart hohe Substitutionsraten erfordern eine Auslegung der Brennkraftmaschine beispielsweise hinsichtlich des Verdichtungsverhältnisses wie sie der eines Gasmotors entspricht. Die teilweise gegensätzlichen Anforderungen an die Brennkraftmaschine für einen Pilotbetrieb und einen Flüssigbetrieb führen zu Kompromissen in der Auslegung, beispielsweise hinsichtlich des Kompressionsverhältnisses.

Problematisch beim Stand der Technik ist, dass über die Lebensdauer eines Injektors für flüssigen Kraftstoff eine exakte Regelung der Nadelposition im ballistischen Bereich unter Verwendung eines einzelnen Injektors mit nur einer Nadel nicht möglich ist. In diesem Bereich bildet sich aufgrund statistischer Schwankungen, Herstellungsvariabilitäten, Abnutzung, usw. die Aktuierung des die Nadel öffnenden Aktuators nicht eindeutig auf die Masse an eingespritztem flüssigem Kraftstoff ab.

Anstelle der Verwendung nur eines Injektors mit nur einer Nadel, die sowohl in einem Pilotbetrieb als auch in einem Betriebsmodus mit vergrößertem Anteil an flüssigen Kraftstoff betreibbar ist, werden daher entweder zwei getrennte Injektoren oder ein Injektor mit zwei getrennten Nadeln eingesetzt. Es ist auch bekannt, die Substitutionsrate nach oben zu beschränken.

Die WO 2014/202202 A1 beschreibt einen Injektor für eine gattungsgemäße Brennkraftmaschine, bei welchem mittels eines im Injektor angeordneten Drucksensors der Druckabfall in einer Speicherkammer gemessen und daraus die tatsächliche Einspritzdauer bestimmt wird. Bei Kleinstmengen ist der Druckabfall aber zu gering, um eine ausreichend genaue Korrelation mit der Einspritzdauer herzustellen

Aufgabe der Erfindung ist die Bereitstellung einer Dual-Fuel-Brennkraftmaschine und eines Verfahrens, bei welchen eine exakte Regelung der Nadelposition im ballistischen Bereich möglich ist.

Diese Aufgabe wird durch eine Brennkraftmaschine mit den Merkmalen des Anspruchs 1 und ein Verfahren mit den Merkmalen des Anspruchs 10 bzw. 11 gelöst. Vorteilhafte Ausführungsformen der Erfindung sind in den abhängigen Ansprüchen definiert.

Dadurch, dass in der Regeleinrichtung ein Algorithmus abgelegt ist, welcher als Eingangsgrößen zumindest das Aktuatoransteuersignal erhält und über ein Injektormodell die Nadelposition berechnet und die mittels des Injektormodells berechnete Nadelposition mit einem gewünschten Nadelpositionssollwert vergleicht und in Abhängigkeit des Ergebnisses des Vergleiches das Aktuatoransteuersignal gleich lässt oder korrigiert, ist es möglich die Nadel im ballistischen Bereich exakt zu regeln. Hierdurch ist die exakte Einspritzung von Kleinstmengen an flüssigem Kraftstoff unter Verwendung nur eines Injektors mit nur einer Nadel möglich, wobei die Substitutionsrate nicht nach oben beschränkt werden muss. Ein und derselbe Injektor kann in einem Bereich von 0 % Substitutionsrate bis zu einer gewählten Obergrenze (z. B. 99,5 %) der Substitutionsrate betrieben werden. Es ist also mit demselben Injektor mit nur einer Nadel ein Betrieb im Flüssigmodus, im Pilotmodus oder ein Mischbetrieb möglich.

Die Regeleinrichtung ist besonders bevorzugt dazu ausgebildet, den Algorithmus während jedes Verbrennungszyklus oder ausgewählter Verbrennungszyklen der Brennkraftmaschine auszuführen und bei Abweichungen das Aktuatoransteuersignal während dieses Verbrennungszyklus zu korrigieren.

Der Algorithmus schätzt auf Basis des Aktuatoransteuersignals eine Nadelposition ab. Die Erfindung geht dann von der durch den Algorithmus berechneten Nadelposition aus und vergleicht diesen Wert mit dem gewünschten Nadelpositionssollwert. Bei Abweichungen kann sofort (z. B. innerhalb von 10 Millisekunden) korrigiert werden.

Bevorzugt ist wenigstens ein Sensor vorgesehen, durch welchen wenigstens eine Messgröße des wenigstens einen Injektors messbar ist, wobei der Sensor in Signalverbindung mit der Regeleinrichtung steht oder bringbar ist. In diesem Fall kann der Algorithmus unter Berücksichtigung der wenigstens einen Messgröße über das Injektormodell die Nadelposition berechnen. Es ist natürlich auch möglich, mehrere Messgrößen zur Abschätzung der ausgebrachten Masse an flüssigem Kraftstoff zu verwenden.

Bevorzugt ist vorgesehen, dass der Algorithmus eine Vorsteuerung aufweist, welche aus dem gewünschten Nadelpositionssollwert einen Vorsteuerbefehl (auch als "Vorsteuersignal" bezeichnet) für das Aktuatoransteuersignal berechnet. Die Vorsteuerung stellt eine schnelle Systemantwort sicher, da sie den Injektor so ansteuert, als ob keine Injektorvariabilität existieren würde.

Bei einer Ausbildung der Regeleinrichtung mit Vorsteuerung kann besonders bevorzugt vorgesehen sein, dass der Algorithmus eine Rückkopplungsschleife aufweist, welche unter Berücksichtigung des von der Vorsteuerung berechneten Vorsteuerbefehls für die Nadelposition und der wenigstens einen Messgröße mittels des Injektormodells die Nadelposition berechnet und ggf. (bei Vorliegen einer Abweichung) den von der Vorsteuerung berechneten Nadelpositionssollwert korrigiert. Die Rückkopplungsschleife wird verwendet, um die Ungenauigkeiten der Vorsteuerung (aufgrund von Herstellungsvariabilitäten, Abnutzung, usw.), welche eine Injektordrift verursachen, zu korrigieren.

Bevorzugt weist der Algorithmus einen Beobachter auf, welcher unter Verwendung des Injektormodells die Nadelposition in Abhängigkeit der wenigstens einen Messgröße und des zumindest einen Aktuatoransteuersignals abschätzt. Eine tatsächliche Messung der Nadelposition ist daher für die Rückkopplungsschleife nicht erforderlich. Unabhängig davon, ob eine Rückkopplungsschleife vorgesehen ist, kann die vom Beobachter abgeschätzte Nadelposition in der Vorsteuerung verwendet werden um das Aktuatoransteuersignal zu verbessern.

Verschiedene mögliche Ausbildungen des Beobachters sind dem Fachmann aus der Literatur bekannt (z. B. Luenberger-Beobachter, Kalman-Filter, "Sliding Mode" Beobachter, usw.).

Der Beobachter kann auch dazu dienen, mit Hilfe des Injektormodells den sich über die Lebensdauer des Injektors verändernden Zustand des Injektors (z. B. durch Alterung oder Verschleiß) für eine Verbesserung des Vorsteuersignals und/oder des Aktuatoransteuersignals zu berücksichtigen.

Grundsätzlich ist es möglich, das Aktuatoransteuersignal auf Basis des Nadelpositionssollwertes und auf Basis der vom Beobachter abgeschätzten Nadelposition zu berechnen. Man erhält so ein adaptives, vom Beobachter modifiziertes Vorsteuersignal. In diesem Fall ist die Regelung also nicht zweiteilig aufgebaut, mit einer Vorsteuerung und einer das Vorsteuersignal korrigierenden Rückkopplungsschleife.

Es kann vorgesehen sein, dass das Injektormodell wenigstens beinhaltet:

- die Druckverläufe in mit dem flüssigen Kraftstoff gefüllten Volumina des Injektors
- Massenflussraten zwischen den mit dem flüssigen Kraftstoff gefüllten Volumina des Injektors
- Dynamik des Aktuators der Nadel, vorzugsweise Dynamik eines Solenoidventils

Der Injektor kann wenigstens aufweisen:

- eine mit einer Common-Rail der Brennkraftmaschine verbundene Eingangsspeicherkammer
- eine mit der Eingangsspeicherkammer verbundene Speicherkammer für flüssigen Kraftstoff
- einem mit der Speicherkammer verbundenen Volumen über Nadelsitz
- einem einerseits mit der Speicherkammer und andererseits mit einer Ablaufleitung verbundenen Verbindungsvolumen
- eine durch eine Nadel verschließbare und mit dem Volumen über Nadelsitz verbundene Ausbringöffnung für flüssigen Kraftstoff
- einen mittels des Aktuatoransteuersignals ansteuerbaren Aktuator, vorzugsweise Solenoidventil, zum Öffnen der Nadel
- vorzugsweise einer einerseits mit der Speicherkammer und andererseits mit dem Verbindungsvolumen verbundenen Steuerkammer

Die Nadel ist üblicherweise entgegen der Öffnungsrichtung durch eine Feder vorgespannt.

Es kann auch ein Injektor vorgesehen sein, der ohne Steuerkammer auskommt, beispielsweise ein Injektor, bei welchem die Nadel durch ein Piezoelement angesteuert wird.

Die wenigstens eine Messgröße kann z.B. ausgewählt sein aus den folgenden Größen oder einer Kombination daraus:

- Druck in einer Common-Rail der Brennkraftmaschine
- Druck in einer Eingangsspeicherkammer des Injektors
- Druck in einer Steuerkammer des Injektors
- Beginn des Abhebens der Nadel vom Nadelsitz

Die Erfindung kann bevorzugt bei einer stationären Brennkraftmaschine, für Marineanwendungen oder mobile Anwendungen wie sogenannte "Non-Road-Mobile-Machinery" (NRMM) - vorzugsweise jeweils als Hubkolbenmaschine - eingesetzt werden. Die Brennkraftmaschine kann als mechanischer Antrieb dienen, z. B. zum Betreiben von Verdichteranlagen oder mit einem Generator zu einem Gensets zur Erzeugung elektrischer Energie gekoppelt sein. Die Brennkraftmaschine weist bevorzugt eine Vielzahl von Brennräumen mit entsprechender Gaszuführvorrichtungen und Injektoren auf. Die Regelung kann individuell für jeden Brennraum erfolgen.

Ausführungsbeispiele der Erfindung werden anhand der Figuren erläutert. Es zeigen:

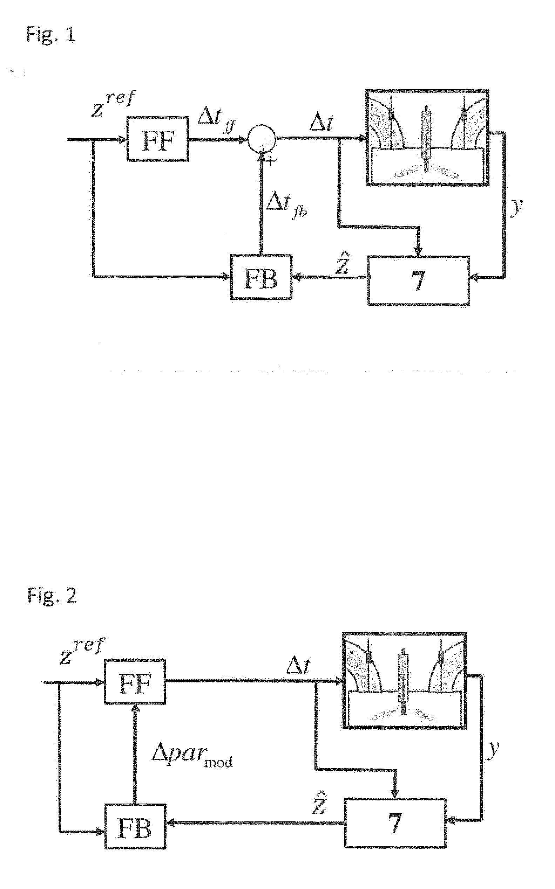

Fig. 1    ein erstes Ausführungsbeispiel des erfindungsgemäßen Regelschemas
Fig. 2    ein zweites Ausführungsbeispiel des erfindungsgemäßen Regelschemas
Fig. 3    ein erstes Beispiel eines schematisch dargestellten Injektors
Fig. 4    ein zweites Beispiel eines schematisch dargestellten Injektors

Fig. 1:

Ziel der Injektorregelung ist in diesem Ausführungsbeispiel die Regelung der Position z der Nadel 6 des Injektors auch für den ballistischen Bereich auf einen Nadelpositionssollwert $z_d^{ref}$ hin, indem die Dauer $\Delta t$ der Betätigung eines Aktuators der Nadel während eines Einspritzvorganges für den flüssigen Kraftstoff sozusagen in Echtzeit geregelt wird. Die Regelstrategie erfolgt durch

- eine Vorsteuerung (FF), welche aus einem gewünschten Nadelpositionssollwert $z_d^{ref}$ ein Vorsteuersignal (im Folgenden auch als "Steuerbefehl" bezeichnet) für die Dauer $\Delta t$ der Betätigung des Aktuators der Nadel berechnet und

- eine Rückkopplungsschleife (FB), welche unter Verwendung eines Beobachters 7 ("State Estimator") unter Berücksichtigung des von der Vorsteuerung berechneten Steuerbefehls für die Dauer $\Delta t$ der Betätigung des Aktuators der Nadel und wenigstens einer Messgröße y (z. B. einer der im Injektor auftretenden Druckverläufe $p_{IA}$, $p_{CC}$, $p_{JC}$, $p_{AC}$, $p_{SA}$ oder der Beginn des Abhebens der Nadel vom Nadelsitz) mittels eines Injektormodells die Position z der Nadel schätzt und ggf. den von der Vorsteuerung berechneten Sollwert $\Delta t_{ff}$ für die Einspritzdauer mittels eines Korrekturwerts $\Delta t_{fb}$ auf die tatsächliche Dauer des Aktuatoransteuersignals $\Delta t$ für die Nadel korrigiert.

Die Vorsteuerung stellt eine schnelle Systemantwort sicher, da sie den Aktuator der Nadel 6 mit einer Dauer $\Delta t_{ff}$ ansteuert, als ob keine Injektorvariabilität existieren würde. Die Vorsteuerung verwendet ein kalibriertes Injektorkennfeld (welches Bestromungsdauer über Einspritzmasse oder -volumen angibt) oder das invertierte Injektormodell um den Nadelpositionssollwert $z^{ref}$ in den Vorsteuerbefehl für die Dauer $\Delta t$ der Betätigung des Aktuators der Nadel umzuwandeln.

Die Rückkopplungsschleife (FB) wird verwendet, um die Ungenauigkeiten der Vorsteuerung (aufgrund von Herstellungsvariabilitäten, Abnutzung, usw.) zu korrigieren, welche eine Injektordrift verursachen. Die Rückkopplungsschleife vergleicht den Nadelpositionssollwert $z^{ref}$ mit der abgeschätzten Position der Nadel z und gibt als Rückkopplung einen Korrektursteuerbefehl $\Delta t_{fb}$ (welcher negativ sein kann) für die Dauer der Betätigung des Aktuators der Nadel ab, falls es eine Diskrepanz zwischen $z^{ref}$ und z gibt. Die Addition von $\Delta t_{ff}$ und $\Delta t_{fb}$ ergibt die schlussendliche Dauer $\Delta t$ der Betätigung des Aktuators der Nadel.

Der Beobachter schätzt die Position der Nadel z in Abhängigkeit der wenigsten einen Messgröße y und der schlussendlichen Dauer $\Delta t$ der Betätigung des Aktuators der Nadel 6 ab. Die wenigstens eine Messgröße kann sich z.B. beziehen auf: common rail Druck $p_{CR}$, Druck in der Eingangsspeicherkammer $p_{IA}$, Druck in der Steuerkammer $p_{CC}$ und Beginn des Abhebens der Nadel vom Nadelsitz . Der Beobachter verwendet ein reduziertes Injektormodell um die Position z der Nadel 6 abzuschätzen.

Fig. 2:

Diese Figur zeigt eine einteilige aufgebaute Regelung, bei welcher das Aktuatoransteuersignal $\Delta t$ auf Basis des Nadelpositionsollwertes $z^{ref}$ und auf Basis der vom Beobachter abgeschätzten, im Vorsteuermodell benutzten Parameter $\Delta par_{mod}$ berechnet wird.. Man erhält so ein adaptives, vom Beobachter modifiziertes Vorsteuersignal. In diesem Fall ist die Regelung also nicht zweiteilig aufgebaut, mit einer Vorsteuerung und einer das Vorsteuersignal korrigierenden Rückkopplungsschleife.

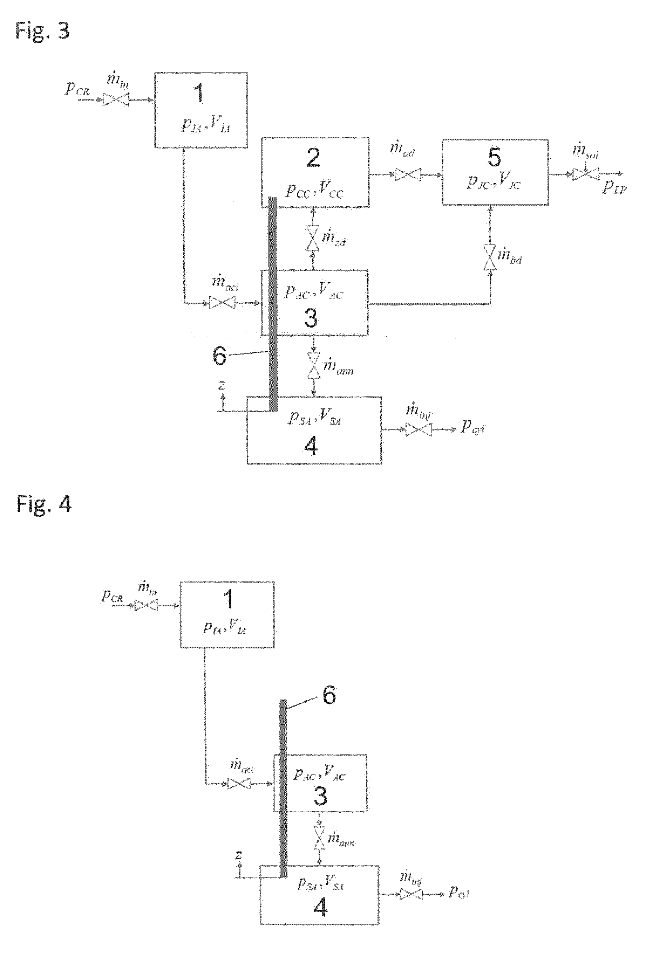

Die Fig. 3 zeigt ein Blockdiagramm eines reduzierten Injektormodells. Das Injektormodell besteht aus einem Strukturmodell des Injektors und einem Gleichungssystem zur Beschreibung des dynamischen Verhaltens des Strukturmodells. Das Strukturmodell besteht aus fünf modellierten Volumina: Eingangsspeicherkammer 1, Speicherkammer 3, Steuerkammer 2, Volumen über Nadelsitz 4 und Verbindungsvolumen 5.

Die Eingangsspeicherkammer 1 stellt die Zusammenfassung aller Volumina zwischen der Eingangsdrossel und dem Rückschlagventil dar. Die Speicherkammer 3 stellt die Zusammenfassung aller Volumina vom Rückschlagventil bis zum Volumen 4 oberhalb des Nadelsitzes dar. Das Volumen 4 über Nadelsitz stellt die Zusammenfassung aller Volumina zwischen dem Nadelsitz bis zur Ausbringöffnung des Injektors dar. Das Verbindungsvolumen 5 stellt die Zusammenfassung aller Volumina dar, welches die Volumina der Speicherkammer 3 und der Steuerkammer 2 mit dem Solenoidventil verbindet.

Die Fig. 4 zeigt einen alternativ ausgebildeten Injektor, der ohne Steuerkammer 2 auskommt, beispielsweise ein Injektor, bei welchem die Nadel durch ein Piezoelement angesteuert wird.

Das nachfolgende Gleichungssystem bezieht sich nicht auf die in Figur 4 gezeigte Ausführung. Die Formulierung eines entsprechenden Gleichungssystems kann analog zu dem nachstehend gezeigten Gleichungssystem erfolgen.

Das dynamische Verhalten des Strukturmodells wird durch folgende Gleichungssysteme beschrieben:

Druckdynamik

Die zeitliche Entwicklung des Druckes innerhalb jedes der Volumina wird auf Basis einer Kombination des Massenerhaltungssatzes und der Druck-Dichte-Charakteristik des flüssigen Kraftstoffes berechnet. Die zeitliche Entwicklung des Druckes ergibt sich aus:

$$\dot{p}_{IA} = \frac{K_f}{\rho_{IA} V_{IA}} \left( \dot{m}_{in} - \dot{m}_{aci} \right) \qquad \text{Gl. 1.1}$$

$$\dot{p}_{CC} = \frac{K_f}{\rho_{CC} V_{CC}} \left( \dot{m}_{zd} - \dot{m}_{ad} - \rho_{CC} \dot{V}_{CC} \right) \qquad \text{Gl. 1.2}$$

$$\dot{p}_{JC} = \frac{K_f}{\rho_{JC} V_{JC}} \left( \dot{m}_{bd} + \dot{m}_{ad} - \dot{m}_{sol} \right) \qquad \text{Gl. 1.3}$$

$$\dot{p}_{AC} = \frac{K_f}{\rho_{AC} V_{AC}} \left( \dot{m}_{aci} - \dot{m}_{ann} - \dot{m}_{bd} - \dot{m}_{zd} - \rho_{AC} \dot{V}_{AC} \right) \qquad \text{Gl. 1.4}$$

$$\dot{p}_{SA} = \frac{K_f}{\rho_{SA} V_{SA}} \left( \dot{m}_{ann} - \dot{m}_{inj} - \rho_{SA} \dot{V}_{SA} \right) \qquad \text{Gl. 1.5}$$

Verwendete Formelzeichen

$p_{IA}$ : Druck in der Eingangsspeicherkammer 1 in bar
$p_{CC}$ : Druck in der Steuerkammer 2 in bar
$p_{JC}$ : Druck im Verbindungsvolumen 5 in bar
$p_{AC}$ : Druck in der Speicherkammer 3 in bar
$p_{SA}$ : Druck in der kleinen Speicherkammer 4 in bar
$\rho_{IA}$ : Dieselmassendichte innerhalb der Eingangsspeicherkammer 1 in $kg/m^3$
$\rho_{CC}$ : Dieselmassendichte innerhalb der Steuerkammer 2 in $kg/m^3$

$\rho_{JC}$ : Dieselmassendichte innerhalb des Verbindungsvolumens 5 in $kg/m^3$
$\rho_{AC}$ : Dieselmassendichte innerhalb der Speicherkammer 3 in $kg/m^3$
$\rho_{SA}$ : Dieselmassendichte innerhalb der kleinen Speicherkammer 4 in $kg/m^3$
$K_f$ : Kompressionsmodul des Dieseltreibstoffs in bar

Nadeldynamik

Die Nadelposition wird anhand der folgenden Bewegungsgleichung berechnet:

$$\ddot{z} = \begin{cases} 0 \; if \; F_{hyd} \leq F_{pre} \\ \frac{1}{m}\left(F_{hyd} - Kz - B\dot{z} - F_{pre}\right) if \; F_{hyd} > F_{pre} \end{cases} \qquad \text{Gl. 2.1}$$

$$F_{hyd} = p_{AC}A_{AC} + p_{SA}A_{SA} - p_{CC}A_{CC} \qquad \text{Gl. 2.2}$$

$$0 \leq z \leq z_{max} \qquad \text{Gl. 2.3}$$

Verwendete Formelzeichen:

$z$ : Nadelposition in Metern (m)
$z_{max}$ : Maximale Auslenkung der Nadel 6 in m
$K$ : Federsteifigkeit in N/m
$B$ : Federdämpfungskoeffizient in N.s/m
$F_{pre}$ : Federvorspannung in N
$A_{AC}$ : Hydraulische Wirkfläche in der Speicherkammer 3 in $m^2$
$A_{SA}$ : Hydraulische Wirkfläche in der kleinen Speicherkammer 4 in $m^2$
$A_{CC}$ : Hydraulische Wirkfläche in der Steuerkammer 2 in $m^2$

Dynamik des Solenoidventils

Das Solenoidventil wird durch eine Transferfunktion erster Ordnung modelliert, welche den Ventilöffnungsbefehl in eine Ventilposition umwandelt. Diese ist gegeben durch:

$$u_{sol}^{cmd} \rightarrow \boxed{\dfrac{z_{sol}^{\max}}{\tau_{sol}s + 1}} \rightarrow z_{sol}$$

Das transiente Systemverhalten wird durch die Zeitkonstante $\tau_{sol}$ charakterisiert und die Position der Nadel 6 bei der maximalen Ventilöffnung ist durch $z_{sol}^{max}$| gegeben. Statt einem Solenoidventil ist auch eine piezoelektrische Betätigung möglich.

Massenflussraten

Die Massenflussrate durch jedes Ventil wird aus der Standarddrosselgleichung für Flüssigkeiten berechnet, welche lautet:

$$\dot{m}_{in} = A_{in}C_{din}\sqrt{2\rho_j|p_{CR} - p_{IA}|}.sgn(p_{CR} - p_{IA}) \qquad \text{Gl. 3.1}$$

$$\dot{m}_{bd} = A_{bd}C_{dbd}\sqrt{2\rho_j|p_{AC} - p_{JC}|}.sgn(p_{AC} - p_{JC}) \qquad \text{Gl. 3.2}$$

$$\dot{m}_{zd} = A_{zd}C_{dzd}\sqrt{2\rho_j|p_{AC} - p_{CC}|}.sgn(p_{AC} - p_{CC}) \qquad \text{Gl. 3.3}$$

$$\dot{m}_{ad} = A_{ad}C_{dad}\sqrt{2\rho_j|p_{CC} - p_{JC}|}.sgn(p_{CC} - p_{JC}) \qquad \text{Gl. 3.4}$$

$$\dot{m}_{sol} = A_{sol}C_{dsol}\sqrt{2\rho_j|p_{JC} - p_{LP}|}.sgn(p_{JC} - p_{LP}) \qquad \text{Gl. 3.5}$$

$$\dot{m}_{aci} = A_{aci}C_{daci}\sqrt{2\rho_j|p_{IA} - p_{AC}|}.sgn(p_{IA} - p_{AC}) \qquad \text{Gl. 3.6}$$

$$\dot{m}_{ann} = A_{ann}C_{dann}\sqrt{2\rho_j|p_{AC} - p_{SA}|}.sgn(p_{AC} - p_{SA}) \qquad \text{Gl. 3.7}$$

$$\dot{m}_{inj} = A_{inj}C_{dinj}\sqrt{2\rho_{SA}|p_{SA} - p_{cyl}|}.sgn(p_{SA} - p_{cyl}) \qquad \text{Gl. 3.8}$$

$$\rho_j = \begin{cases} \rho_{in} \ if \ p_{in} \geq p_{out} \\ \rho_{out} \ if \ p_{in} < p_{out} \end{cases} \qquad \text{Gl. 3.9}$$

Verwendete Formelzeichen:

$\dot{m}_{in}$ : Massenflussdichte über die Eingangsdrossel in kg/s
$\dot{m}_{bd}$ : Massenflussrate über das Bypassventil zwischen Speicherkammer 3 und Verbindungsvolumen 5 in kg/s
$\dot{m}_{zd}$ : Massenflussrate über das Speiseventil beim Einlass der Steuerkammer 2 in kg/s
$\dot{m}_{ad}$ : Massenflussrate über das Auslassventil der Steuerkammer 2 in kg/s
$\dot{m}_{sol}$ : Massenflussrate über das Solenoidventil in kg/s
$\dot{m}_{aci}$ : Massenflussrate über den Einlass der Speicherkammer 3 in kg/s
$\dot{m}_{ann}$ : Massenflussrate über den Nadelsitz in kg/s
$\dot{m}_{inj}$ : Massenflussrate über die Injektordüse in kg/s

Auf Basis des oben formulierten Injektormodells erhält der Fachmann mittels des Beobachters in an sich bekannter Weise (siehe z. B. Isermann, Rolf, "Digitale Regelsysteme", Springer Verlag Heidelberg 1977, Kapital 22.3.2, Seite 379 ff. oder F. Castillo et al., "Simultaneous Air Fraction and Low-Pressure EGR Mass Flow Rate Estimation for Diesel Engines", IFAC Joint conference SSSC-5th Symposium on System Structure and Control, Grenoble, France 2013) den abgeschätzten Wert für die Position der Nadel z .
Unter Verwendung obiger Gleichungssysteme konstruiert man die sogenannten Beobachtergleichungen ("observer equations"), vorzugsweise unter Verwendung eines an sich bekannten Beobachters vom "sliding mode observer"-Typ, indem man zu den Gleichungen des Injektormodells das sogenannte Beobachtergesetz ("observer law") hinzufügt. Bei einem "sliding mode" Beobachter erhält man das Beobachtergesetz durch Berechnung einer Hyperfläche ("hypersurface") aus dem wenigstens einen Messsignal und jenem Wert, der sich aus den Beobachtergleichungen ergibt. Durch Quadrierung der Gleichung der Hyperfläche erhält man eine verallgemeinerte Ljapunovgleichung (verallgemeinerte Energiegleichung). Dabei handelt es sich um eine Funktionalgleichung. Das Beobachtergesetz ist jene Funktion, welche die Funktionalgleichung minimiert. Diese kann durch die an sich bekannten Variationstechniken oder numerisch bestimmt werden. Dieser Vorgang wird innerhalb eines Verbrennungszyklus für jeden Zeitschritt (abhängig von der zeitlichen Auflösung der Regelung) durchgeführt.

Das Ergebnis ist je nach Anwendung die abgeschätzte eingespritzte Masse an flüssigem Kraftstoff, die Position der Nadel 6 oder einer der Drücke in einem der Volumina des Injektors.

**Patentansprüche**

1. Dual-Fuel-Brennkraftmaschine, mit:

   - einer Regeleinrichtung
   - wenigstens einem Brennraum
   - wenigstens einer Gaszuführvorrichtung zur Zufuhr eines gasförmigen Kraftstoffes zu dem wenigstens einen Brennraum und
   - wenigstens einem durch die Regeleinrichtung über ein Aktuatoransteuersignal regelbaren Injektor zur Einspritzung von flüssigem Kraftstoff in den wenigstens einen Brennraum, wobei der wenigstens eine Injektor eine durch eine Nadel (6) verschließbare Ausbringöffnung für den flüssigen Kraftstoff verfügt, und wobei die Regeleinrichtung in einem Pilotbetriebsmodus der Brennkraftmaschine über das Aktuatoransteuersignal ein Öffnen der Nadel im ballistischen Bereich der Nadel regelt

   **dadurch gekennzeichnet, dass** in der Regeleinrichtung ein Algorithmus abgelegt ist, welcher als Eingangsgrößen zumindest das Aktuatoransteuersignal ($\Delta t$) erhält und über ein Injektormodell eine Position der Nadel (6) berechnet und die mittels des Injektormodells berechnete Position der Nadel mit einem Nadelpositionssollwert ($z^{ref}$) vergleicht und in Abhängigkeit des Ergebnisses des Vergleiches das Aktuatoransteuersignal ($\Delta t$) gleich lässt oder korrigiert.

2. Dual-Fuel-Brennkraftmaschine nach Anspruch 1, wobei der Algorithmus eine Vorsteuerung (FF) aufweist, welche aus dem Nadelpositionssollwert ($z^{ref}$) ein Vorsteuersignal ($\Delta t_{ff}$) für das Aktuatoransteuersignal ($\Delta t$) berechnet.

3. Dual-Fuel-Brennkraftmaschine nach wenigstens einem der vorangehenden Ansprüche, wobei wenigstens ein Sensor vorgesehen ist, durch welchen wenigstens eine Messgröße (y) des wenigstens einen Injektors messbar ist, wobei der Sensor in Signalverbindung mit der Regeleinrichtung steht oder bringbar ist.

4. Dual-Fuel-Brennkraftmaschine nach Anspruch 3, wobei der Algorithmus eine Rückkopplungsschleife (FB), welche unter Berücksichtigung des von der Vorsteuerung berechneten Steuerbefehls ($\Delta t$) für die Position der Nadel (6) und der wenigstens einen Messgröße (y) mittels des Injektormodells die Nadelposition berechnet und ggf. das von der Vorsteuerung berechnete Aktuatoransteuersignal ($\Delta t$) korrigiert.

5. Dual-Fuel-Brennkraftmaschine nach wenigstens einem der vorangehenden Ansprüche, wobei der Algorithmus einen Beobachter aufweist, welcher unter Verwendung des Injektormodells und unter Berücksichtigung des Aktuatoransteuersignals ($\Delta t$) und der wenigstens einen Messgröße (y) die Nadelposition (z) abschätzt.

6. Dual-Fuel-Brennkraftmaschine nach wenigstens einem der vorangehenden Ansprüche, wobei das Injektormodell wenigstens beinhaltet:

   - die Druckverläufe ($p_{IA}$, $p_{CC}$, $p_{JC}$, $p_{AC}$, $p_{SA}$) in mit dem flüssigen Kraftstoff gefüllten Volumina des Injektors
   - Massenflussraten (m) zwischen den mit dem flüssigen Kraftstoff gefüllten Volumina des Injektors
   - Dynamik des Aktuators der Nadel, vorzugsweise Dynamik eines Solenoidventils

7. Dual-Fuel-Brennkraftmaschine nach wenigstens einem der vorangehenden Ansprüche, wobei der Injektor wenigstens aufweist:

   - eine mit einer Common-Rail der Brennkraftmaschine verbundene Eingangsspeicherkammer (1)
   - eine mit der Eingangsspeicherkammer (1) verbundene Speicherkammer (3) für flüssigen Kraftstoff
   - einem mit der Speicherkammer (3) verbundenen Volumen (4) über Nadelsitz
   - einem einerseits mit der Speicherkammer (3) und andererseits mit einer Ablaufleitung verbundenen Verbindungsvolumen (5)
   - eine durch die Nadel (6) verschließbare und mit dem Volumen (4) über Nadelsitz verbundene Ausbringöffnung für flüssigen Kraftstoff
   - einen mittels des Aktuatoransteuersignals ansteuerbaren Aktuator, vorzugsweise Solenoidventil, zum Öffnen der Nadel (6)
- vorzugsweise einer einerseits mit der Speicherkammer (3) und andererseits mit dem Verbindungsvolumen (5) verbundenen Steuerkammer (2)

8. Dual-Fuel-Brennkraftmaschine nach wenigstens einem der vorangehenden Ansprüche, wobei die wenigstens eine Messgröße ausgewählt ist aus den folgenden Größen oder einer Kombination daraus:

- Druck ($p_{CR}$) in einer Common-Rail der Brennkraftmaschine
- Druck ($p_{IA}$) in einer Eingangsspeicherkammer (1) des Injektors
- Druck ($p_{CC}$) in einer Steuerkammer (2) des Injektors
- Beginn des Abhebens der Nadel (6) vom Nadelsitz

9. Dual-Fuel-Brennkraftmaschine nach wenigstens einem der vorangehenden Ansprüche, wobei die Regeleinrichtung dazu ausgebildet ist, den Algorithmus während jedes Verbrennungszyklus oder ausgewählter Verbrennungszyklen der Brennkraftmaschine auszuführen und bei Abweichungen das Aktuatoransteuersignal ($\Delta t$) während dieses Verbrennungszyklus zu korrigieren.

10. Verfahren zum Betreiben einer Dual-Fuel-Brennkraftmaschine, insbesondere einer Dual-Fuel-Brennkraftmaschine nach wenigstens einem der vorangehenden Ansprüche, wobei einem Brennraum der Brennkraftmaschine flüssiger Kraftstoff zugeführt wird, **dadurch gekennzeichnet, dass** eine Nadelposition einer Nadel eines Injektors für den flüssigen Kraftstoff in Abhängigkeit von einem Aktuatoransteuersignal ($\Delta t$) eines Aktuators des Injektors für den flüssigen Kraftstoff unter Verwendung eines Injektormodells berechnet wird und das Aktuatoransteuersignal ($\Delta t$) bei Abweichungen zwischen einem Nadelpositionssollwert ($z^{ref}$) und der berechneten Position korrigiert wird, wobei das Verfahren während jedes Verbrennungszyklus oder ausgewählter Verbrennungszyklen der Brennkraftmaschine ausgeführt wird und eine allfällige Korrektur des Aktuatoransteuersignals ($\Delta t$) während dieses Verbrennungszyklus erfolgt.

11. Verfahren zum Betreiben eines Injektors, mit welchem Injektor einem Brennraum einer Brennkraftmaschine flüssiger Kraftstoff zugeführt werden kann, **dadurch gekennzeichnet, dass** eine Nadelposition einer Nadel eines Injektors für den flüssigen Kraftstoff in Abhängigkeit von einem Aktuatoransteuersignal ($\Delta t$) eines Aktuators des Injektors für den flüssigen Kraftstoff unter Verwendung eines Injektormodells berechnet wird und das Aktuatoransteuersignal ($\Delta t$) bei Abweichungen zwischen einem Nadelpositionssollwert ($z^{ref}$) und der berechneten Position korrigiert wird.

Fig. 1

Fig. 2

Fig. 3

Fig. 4

Europäisches Patentamt

European Patent Office

Office européen des brevets

# EUROPÄISCHER RECHERCHENBERICHT

Nummer der Anmeldung

EP 15 19 2920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2005/274360 A1 (MUMFORD DAVID [CA] ET AL) 15. Dezember 2005 (2005-12-15) * Absätze [0011], [0119] - [0124]; Abbildungen * ----- | 1-11 | INV. F02D41/14 F02D41/24 F02D19/06 F02D19/10 |
| Y | WO 2011/072293 A2 (PURDUE RESEARCH FOUNDATION [US]; SHAVER GREGORY MATTHEW [US]; SATKOSKI) 16. Juni 2011 (2011-06-16) * Seite 8 - Seite 13 * * Seite 19 - Seite 31 * * Seite 35 - Seite 37 * * Abbildungen 1-10,22 * ----- | 1-11 | F02D41/20 ADD. F02D41/30 |
| A | US 2004/118557 A1 (ANCIMER RICHARD [CA] ET AL) 24. Juni 2004 (2004-06-24) * Absätze [0007], [0027], [0028], [0041], [0062] - [0065]; Abbildung 1 * ----- | 1 | |
| A | DE 10 2012 109655 A1 (DENSO CORP [JP]) 10. April 2014 (2014-04-10) * Ansprüche; Abbildungen * ----- | 1,6,7 | |

RECHERCHIERTE SACHGEBIETE (IPC)

F02D
F02M

Der vorliegende Recherchenbericht wurde für alle Patentansprüche erstellt

| Recherchenort | Abschlußdatum der Recherche | Prüfer |
|---|---|---|
| München | 14. Juni 2016 | Aign, Torsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 2920

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2016

| Im Recherchenbericht angeführtes Patentdokument | Datum der Veröffentlichung | Mitglied(er) der Patentfamilie | Datum der Veröffentlichung |
|---|---|---|---|
| US 2005274360 A1 | 15-12-2005 | CA 2562025 A1 | 22-12-2005 |
| | | CN 1977105 A | 06-06-2007 |
| | | EP 1766224 A1 | 28-03-2007 |
| | | JP 3161990 U | 19-08-2010 |
| | | JP 2008502848 A | 31-01-2008 |
| | | US 2005274360 A1 | 15-12-2005 |
| | | WO 2005121542 A1 | 22-12-2005 |
| WO 2011072293 A2 | 16-06-2011 | EP 2510217 A2 | 17-10-2012 |
| | | US 2013019842 A1 | 24-01-2013 |
| | | WO 2011072293 A2 | 16-06-2011 |
| US 2004118557 A1 | 24-06-2004 | AU 2004277515 A1 | 14-04-2005 |
| | | CA 2539905 A1 | 14-04-2005 |
| | | EP 1685317 A1 | 02-08-2006 |
| | | JP 2007507641 A | 29-03-2007 |
| | | US 2004118557 A1 | 24-06-2004 |
| | | WO 2005033493 A1 | 14-04-2005 |
| DE 102012109655 A1 | 10-04-2014 | KEINE | |

EPO FORM P0461

Für nähere Einzelheiten zu diesem Anhang : siehe Amtsblatt des Europäischen Patentamts, Nr.12/82

**EP 3 165 749 A1**

**IN DER BESCHREIBUNG AUFGEFÜHRTE DOKUMENTE**

**In der Beschreibung aufgeführte Patentdokumente**

- WO 2014202202 A1

- FR 2013